(19) Europäisches Patentamt
European Patent Office
Office européen des brevets

(11) **EP 3 942 916 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **20187023.5**

(22) Anmeldetag: **21.07.2020**

(51) Internationale Patentklassifikation (IPC):
***A01D 34/90*** *(2006.01)*   ***B25F 5/00*** *(2006.01)*
***B25F 5/02*** *(2006.01)*

(52) Gemeinsame Patentklassifikation (CPC):
**B25F 5/026; B25F 5/006;** A01D 34/905

(54) **VERFAHREN ZUM BETREIBEN EINES HANDGEFÜHRTEN BEARBEITUNGSGERÄTS UND HANDGEFÜHRTES BEARBEITUNGSGERÄT**

METHOD FOR OPERATING A HAND-HELD PROCESSING DEVICE AND HAND-HELD PROCESSING DEVICE

PROCÉDÉ DE FONCTIONNEMENT D'UN APPAREIL D'USINAGE GUIDÉ À LA MAIN ET APPAREIL D'USINAGE GUIDÉ À LA MAIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.01.2022   Patentblatt 2022/04**

(73) Patentinhaber: **Andreas Stihl AG & Co. KG**
**71336 Waiblingen (DE)**

(72) Erfinder: **PRITZEN, Thomas**
**71336 Bittenfeld (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
WO-A1-2008/097138          DE-A1- 10 034 437
DE-A1- 102005 031 074     US-A1- 2007 056 414

EP 3 942 916 B1

**Beschreibung**

ANWENDUNGSGEBIET UND STAND DER TECHNIK

Die Erfindung bezieht sich auf ein Verfahren zum Betreiben eines handgeführten Bearbeitungsgeräts und ein handgeführtes Bearbeitungsgerät.

Die DE 10 2005 031 074 A1 offenbart ein kraftgetriebenes Handwerkzeug, insbesondere Elektrowerkzeug, mit einem Gehäuse, in dem ein Motor zum Antrieb eines Werkzeuges aufgenommen ist, aufweisend eine Dämpfungseinrichtung zur aktiven Beeinflussung des Vibrationsverhaltens, die mindestens ein Dämpfungselement mit einem Sensor aufweist, der bei einer Verformung ein elektrisches Sensorsignal angibt, das einer elektrischen Schaltung zugeführt ist, die ein davon abgeleitetes Steuersignal erzeugt, das einem Aktor mit einer bestimmten Phasenverschiebung zum Sensorsignal zugeführt ist.

AUFGABE UND LÖSUNG

Der Erfindung liegt als Aufgabe die Bereitstellung eines Verfahrens zum Betreiben eines handgeführten Bearbeitungsgeräts und eines handgeführten Bearbeitungsgeräts zugrunde, das jeweils verbesserte Eigenschaften aufweist, insbesondere einen hohen Komfort für einen Benutzer des Bearbeitungsgeräts ermöglicht.

Die Erfindung löst diese Aufgabe durch die Bereitstellung eines Verfahrens mit den Merkmalen des Anspruchs 1 und eines handgeführten Bearbeitungsgeräts mit den Merkmalen des Anspruchs 12. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben eines handgeführten Bearbeitungsgeräts ausgebildet bzw. konfiguriert bzw. vorgesehen. Das Bearbeitungsgerät umfasst bzw. weist eine bewegliche, insbesondere dreh- bzw. rotationsbewegliche, Bearbeitungswerkzeugeinrichtung, eine, insbesondere dreh- bzw. rotationsbewegliche, Welle, ein Antriebsmotorsystem und eine, insbesondere elektrisch, ansteuerbare, insbesondere elektrische, insbesondere elektronische, Schwingungsdämpfungseinrichtung auf. Die Welle ist zur Bewegung, insbesondere Dreh- bzw. Rotationsbewegung, insbesondere mindestens eines Teils, der Bearbeitungswerkzeugeinrichtung ausgebildet bzw. konfiguriert. Das Antriebsmotorsystem ist zum Antrieb, insbesondere zur Dreh- bzw. Rotationsbewegung, der Welle ausgebildet bzw. konfiguriert. Die Bearbeitungswerkzeugeinrichtung, die Welle und das Antriebsmotorsystem, insbesondere jeweils, mindestens teilweise bilden mindestens einen Teil eines mindestens dreh- bzw. rotations- bzw. torsionsschwingungsfähigen Systems. Die Schwingungsdämpfungseinrichtung ist mindestens zur, insbesondere mittelbaren und/oder unmittelbaren, Dämpfung und/oder, insbesondere sogar, zur, insbesondere mittelbaren und/oder unmittelbaren, Reduzierung, insbesondere Vermeidung, einer Anregung, insbesondere Nicht-Anregung, mindestens einer Schwingung, insbesondere einer Dreh- bzw. Rotations- bzw. Torsionsschwingung, insbesondere einer Amplitude der Schwingung, des drehschwingungsfähigen Systems und/oder, insbesondere mittelbar und/oder unmittelbar, anregbar bzw. anregungsfähig durch das drehschwingungsfähige System ausgebildet bzw. konfiguriert. Das Verfahren umfasst bzw. weist die Schritte auf: a) Betreiben, insbesondere automatisches Betreiben, des Antriebsmotorsystems zum Antrieb der Welle zur Bewegung der Bearbeitungswerkzeugeinrichtung, insbesondere durch den Benutzer. b) Ansteuern, insbesondere automatisches Ansteuern, der Schwingungsdämpfungseinrichtung während des Betreibens bzw. des Schritts a) bzw. zeitgleich mit dem Betreiben bzw. dem Schritt a) derart, dass die Schwingung mindestens gedämpft und/oder, insbesondere sogar, eine Anregung der Schwingung reduziert, insbesondere vermieden, insbesondere nicht angeregt, wird.

Dies, insbesondere die Dämpfung und/oder die Reduzierung, insbesondere die Vermeidung, einer Anregung der Schwingung, ermöglicht eine niedrige oder sogar keine Belastung für den Benutzer, insbesondere ein Handgelenk des Benutzers. Somit ermöglicht dies einen hohen Komfort für den Benutzer.

Insbesondere kann das handgeführte Bearbeitungsgerät ein handgetragenes Bearbeitungsgerät sein. Zusätzlich oder alternativ kann handgeführtes, insbesondere handgetragenes, Bearbeitungsgerät bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen bzw. haben kann. Weiter zusätzlich oder alternativ kann das Bearbeitungsgerät ein Garten-, Forst- und/oder Baubearbeitungsgerät sein.

Die Bearbeitungswerkzeugeinrichtung kann eine Garten-, Forst- und/oder Baubearbeitungswerkzeugeinrichtung sein. Zusätzlich oder alternativ kann die Bearbeitungswerkzeugeinrichtung linear- bzw. translationsbeweglich sein.

Die Welle und die Bearbeitungswerkzeugeinrichtung können miteinander mechanisch bewegungsverbunden sein. Zusätzlich oder alternativ kann die Welle eine Starrwelle oder eine Flexwelle sein.

Das Antriebsmotorsystem und die Welle können miteinander mechanisch bewegungsverbunden sein.

Die Bearbeitungswerkzeugeinrichtung kann im Bereich eines, insbesondere unteren und/oder ersten, Endes, insbesondere an dem Ende, der Welle angeordnet sein und/oder das Antriebsmotorsystem kann im Bereich eines, insbesondere anderen und/oder oberen und/oder zweiten, insbesondere gegenüberliegenden, Endes, insbesondere an dem Ende, der Welle angeordnet sein.

Die Bearbeitungswerkzeugeinrichtung, insbesondere mindestens teilweise als mindestens ein Teil einer ersten Masse, die Welle, insbesondere mindestens teilweise als mindestens ein Teil einer Stabfeder, insbesondere einer Drehstabfeder, und das Antriebsmotorsystem, insbesondere mindestens teilweise als mindestens ein Teil einer zweiten Masse, können mindestens einen Teil eines Zweimassen-Schwingers bzw. eines Zweimassen-Schwingungs-Systems bilden und/oder das mindestens drehschwingungsfähige System kann ein Zweimassen-Schwingungs-System sein und/oder die Schwingung kann die eines Zweimassen-Schwingers bzw. eines Zweimassen-Schwingungs-Systems sein.

Das mindestens drehschwingungsfähige System, insbesondere die Welle, kann zusätzlich biegeschwingungsfähig sein. Zusätzlich oder alternativ kann die Schwingung eine Biegeschwingung sein. Weiter zusätzlich oder alternativ kann die Schwingung eine Eigen- und/oder Resonanzschwingung sein.

Die Schwingung kann durch das Betreiben des Antriebsmotorsystems mindestens ohne das Ansteuern der Schwingungsdämpfungseinrichtung und/oder durch eine externe Störung der Bewegung der Bearbeitungswerkzeugeinrichtung, wie z.B. einen Schlag auf die Bearbeitungswerkzeugeinrichtung, wie z.B. durch einen Boden oder einen Stein, insbesondere mittelbar und/oder unmittelbar, anregbar sein und/oder angeregt werden.

Das Antriebsmotorsystem und die Schwingungsdämpfungseinrichtung sind mindestens teilweise, insbesondere vollständig, integriert bzw. kombiniert bzw. gleich. Dies ermöglicht einen Synergieeffekt und somit einen Einspareffekt und/oder die passive Dämpfung und/oder die passive Reduzierung, insbesondere die passive Vermeidung, einer Anregung der Schwingung.

Das, insbesondere elektrische, insbesondere elektronische, Antriebsmotorsystem umfasst bzw. weist einen Elektroantriebsmotor auf. Der Elektroantriebsmotor ist zum Antrieb, insbesondere zur Dreh- bzw. Rotationsbewegung, der Welle ausgebildet bzw. konfiguriert. Das Antriebsmotorsystem aufweisend den, insbesondere ansteuerbaren, Elektroantriebsmotor und die Schwingungsdämpfungseinrichtung sind mindestens teilweise integriert. Der Schritt a) umfasst bzw. weist auf: Betreiben, insbesondere automatisches Betreiben, des Elektroantriebsmotors zum Antrieb der Welle zur Bewegung der Bearbeitungswerkzeugeinrichtung, insbesondere durch den Benutzer. Der Schritt a) und/oder der Schritt b) umfassen/umfasst bzw. weisen/weist auf: Ansteuern, insbesondere automatisches Ansteuern, und/oder Betreiben, insbesondere automatisches Betreiben, des Elektroantriebsmotors derart, dass die Schwingung mindestens gedämpft und/oder, insbesondere sogar, eine Anregung der Schwingung reduziert, insbesondere vermieden, insbesondere nicht angeregt, wird. Insbesondere kann das Bearbeitungsgerät ein elektrisches Bearbeitungsgerät, insbesondere ein Akku-Bearbeitungsgerät, sein.

In einer Weiterbildung der Erfindung ist das Bearbeitungsgerät ein Schneidgerät, insbesondere ein Freischneider bzw. eine Motorsense oder ein Kantenschneider. Zusätzlich oder alternativ ist die Bearbeitungswerkzeugeinrichtung eine Schneidwerkzeugeinrichtung, insbesondere umfasst bzw. weist die Bearbeitungswerkzeugeinrichtung einen Schneidfaden, ein Schneidmesser oder ein Schneidblatt, insbesondere mit mindestens einer Schneidkante und/oder mit mindestens einem Schneidzahn, auf. Bei einem solchen Bearbeitungsgerät und/oder einer solchen Bearbeitungswerkzeugeinrichtung kann die Schwingung durch das Betreiben des Antriebsmotorsystems mindestens ohne das Ansteuern der Schwingungsdämpfungseinrichtung und/oder durch eine externe Störung der Bewegung der Bearbeitungswerkzeugeinrichtung besonders stark anregbar sein und/oder angeregt werden. Somit ist für ein solches Bearbeitungsgerät und/oder eine solche Bearbeitungswerkzeugeinrichtung die Dämpfung und/oder die Reduzierung, insbesondere die Vermeidung, einer Anregung der Schwingung besonders vorteilhaft.

In einer Weiterbildung der Erfindung umfasst bzw. weist das Bearbeitungsgerät ein, insbesondere bewegliches, Getriebe auf. Das Getriebe ist zur Bewegung, insbesondere Dreh- bzw. Rotationsbewegung, insbesondere mindestens des Teils, der Bearbeitungswerkzeugeinrichtung ausgebildet bzw. konfiguriert und die Welle ist zur Bewegung, insbesondere Dreh- bzw. Rotationsbewegung, insbesondere mindestens eines Teils, des Getriebes ausgebildet bzw. konfiguriert. Zusätzlich oder alternativ ist das Getriebe zum Antrieb, insbesondere zur Dreh- bzw. Rotationsbewegung, der Welle ausgebildet bzw. konfiguriert und das Antriebsmotorsystem ist zum Antrieb, insbesondere zur Dreh- bzw. Rotationsbewegung, insbesondere mindestens eines Teils, des Getriebes ausgebildet bzw. konfiguriert. Das Getriebe bildet mindestens teilweise einen Teil des drehschwingungsfähigen Systems. Insbesondere können das Getriebe und die Bearbeitungswerkzeugeinrichtung miteinander und die Welle und das Getriebe miteinander und/oder das Getriebe und die Welle miteinander und das Antriebsmotorsystem und das Getriebe miteinander, insbesondere jeweils, mechanisch bewegungsverbunden sein. Zusätzlich oder alternativ kann das Getriebe im Bereich der Bearbeitungswerkzeugeinrichtung und/oder des einen und/oder unteren und/oder ersten Endes, insbesondere an dem Ende, der Welle und/oder im Bereich des Antriebsmotorsystems und/oder des anderen und/oder oberen und/oder zweiten Endes, insbesondere an dem Ende, der Welle angeordnet sein. Weiter zusätzlich oder alternativ kann das Getriebe, insbesondere mindestens teilweise als ein Teil der ersten Masse oder der zweiten Masse, einen Teil des Zweimassen-Schwingers bzw. des Zweimassen-Schwingungs-Systems bilden.

In einer Weiterbildung der Erfindung umfasst bzw. weist das Bearbeitungsgerät einen Schaft bzw. ein Rohr auf. Die Welle ist, insbesondere mindestens teilweise, in dem Schaft angeordnet, insbesondere gelagert. Die Bearbeitungswerkzeugeinrichtung, insbesondere mindestens teilweise, und das Antriebsmotorsystem, insbesondere mindestens teilweise, sind miteinander mittels mindestens des Schafts, insbesondere fest, mechanisch verbunden. Insbesondere ist das drehschwingungsfähige System mittels mindestens des Schafts mechanisch geschlossen. Der Schaft ermöglicht, dass die Schwingung mindestens ohne das Ansteuern der Schwingungsdämpfungseinrichtung außen bzw. für den Benutzer spürbar sein kann. Insbesondere kann der Schaft mindestens teilweise einen Teil des drehschwingungsfähigen Systems bilden. Zusätzlich oder alternativ kann der Schaft biegeschwingungsfähig sein. Weiter zusätzlich oder alternativ kann die Schwingung, insbesondere die Biegeschwingung, mindestens teilweise des Schafts sein. Insbesondere kann die, insbesondere äußere, Biegeschwingung des Schafts durch die, insbesondere innere, Drehschwingung des drehschwingungsfähigen Systems anregbar sein, insbesondere falls die Welle eine Flexwelle ist. Weiter zusätzlich oder alternativ kann die Bearbeitungswerkzeugeinrichtung im Bereich eines, insbesondere unteren und/oder ersten, Endes, insbesondere an dem Ende, des Schafts angeordnet sein und/oder das Antriebsmotorsystem kann im Bereich eines, insbesondere anderen und/oder oberen und/oder zweiten, insbesondere gegenüberliegenden, Endes, insbesondere an dem Ende, des Schafts angeordnet sein. Weiter zusätzlich oder alternativ kann der Schaft, insbesondere mindestens teilweise als mindestens ein Teil einer, insbesondere der, Stabfeder, insbesondere einer, insbesondere der, Drehstabfeder, einen Teil eines, insbesondere des, Zweimassen-Schwingers bzw. eines, insbesondere des, Zweimassen-Schwingungs-Systems bilden.

In einer Weiterbildung, insbesondere einer Ausgestaltung, der Erfindung umfasst bzw. weist das Bearbeitungsgerät mindestens einen Handgriff auf. Der mindestens eine Handgriff ist zwischen Enden, insbesondere in einer Mitte, der Welle im Bereich der Welle angeordnet, insbesondere an dem Schaft, soweit vorhanden, befestigt. Der mindestens eine Handgriff ermöglicht einerseits ein Führen, insbesondere ein Tragen, des Bearbeitungsgeräts durch den Benutzer und andererseits, dass die Schwingung mindestens ohne das Ansteuern der Schwingungsdämpfungseinrichtung für den Benutzer bzw. außen spürbar sein kann.

In einer Weiterbildung der Erfindung umfasst bzw. weist die Schwingungsdämpfungseinrichtung mindestens einen, insbesondere elektrischen, Aktor, insbesondere mindestens einen Solenoid bzw. eine Zylinderspule und/oder einen Linearaktor, auf. Der mindestens eine Aktor ist mindestens zur, insbesondere mittelbaren und/oder unmittelbaren, Dämpfung und/oder, insbesondere sogar, zur, insbesondere mittelbaren und/oder unmittelbaren, Reduzierung, insbesondere Vermeidung, einer Anregung, insbesondere Nicht-Anregung, mindestens der Schwingung ausgebildet bzw. konfiguriert. Der Schritt b) umfasst bzw. weist auf: Ansteuern, insbesondere automatisches Ansteuern, des mindestens einen Aktors derart, dass die Schwingung mindestens gedämpft und/oder, insbesondere sogar, eine Anregung der Schwingung reduziert, insbesondere vermieden, insbesondere nicht angeregt, wird. Dies ermöglicht die aktive Dämpfung und/oder die aktive Reduzierung, insbesondere die aktive Vermeidung, einer Anregung der Schwingung. Insbesondere kann der Aktor zur Erzeugung einer mechanischen Bewegung zur Dämpfung und/oder zur Reduzierung, insbesondere Vermeidung, einer Anregung der Schwingung, insbesondere zur Kompensation der Schwingung, ausgebildet sein, insbesondere erzeugen. Zusätzlich oder alternativ kann der Aktor einen Piezoaktor, insbesondere eine Piezofolie, aufweisen, insbesondere sein. Weiter zusätzlich oder alternativ kann der Aktor im Bereich der Bearbeitungswerkzeugeinrichtung und/oder des einen und/oder unteren und/oder ersten Endes, insbesondere an dem Ende, der Welle oder des Schafts und/oder im Bereich des Antriebsmotorsystems und/oder des anderen und/oder oberen und/oder zweiten Endes, insbesondere an dem Ende, der Welle oder des Schafts und/oder zwischen den Enden, insbesondere in der Mitte, der Welle im Bereich der Welle, insbesondere an dem Schaft, soweit vorhanden, angeordnet, insbesondere befestigt, sein.

In einer Weiterbildung, insbesondere einer Ausgestaltung, der Erfindung umfasst bzw. weist das Antriebsmotorsystem einen Verbrennungsantriebsmotor auf. Der Verbrennungsantriebsmotor ist zum Antrieb, insbesondere zur Dreh- bzw. Rotationsbewegung, der Welle ausgebildet bzw. konfiguriert. Der Schritt a) umfasst bzw. weist auf: Betreiben, insbesondere automatisches Betreiben, des Verbrennungsantriebsmotors zum Antrieb der Welle zur Bewegung der Bearbeitungswerkzeugeinrichtung, insbesondere durch den Benutzer. Insbesondere kann die Schwingungsdämpfungseinrichtung den mindestens einen Aktor aufweisen.

In einer Ausgestaltung der Erfindung umfasst bzw. weist die Schwingungsdämpfungseinrichtung einen, insbesondere elektrischen, insbesondere elektronischen, Kerbfilter (Englisch: notch filter) auf. Der Schritt a) und/oder der Schritt b) umfassen/umfasst bzw. weisen/weist auf: Betreiben und/oder Ansteuern des Elektroantriebsmotors unter bzw. mittels Verwendung des Kerbfilters, insbesondere mittels Ausfilterns, insbesondere automatischen Ausfilterns, insbesondere nur, einer mindestens die Schwingung anregenden Frequenzkomponente bzw. eines Frequenzanteils, soweit vorhanden bzw. enthalten, insbesondere einer Eigen- und/oder Resonanzfrequenz der Schwingung, aus einem, insbesondere physikalischen, Größen-Signal, insbesondere einem Soll-Drehmoment-Signal, einem Soll-Strom-Signal und/oder einem Rückführungsgrößen-Signal, insbesondere zum Betreiben und/oder Ansteuern des Elektroantriebsmotors, einer Motorsteuerelektronik, insbesondere einer Motorregelelektronik, des Antriebsmotorsystems.

In anderen Worten: Filtern, insbesondere automatisches Filtern, des Größen-Signals mittels des Kerbfilters derart, dass im Frequenzspektrum des Größen-Signals die mindestens die Schwingung anregende Frequenzkomponente bzw. der Frequenzanteil, soweit vorhanden bzw. enthalten, insbesondere der Eigen- und/oder Resonanzfrequenz, unterdrückt wird und/oder ist. Dies ermöglicht die Reduzierung, insbesondere die Vermeidung, einer Anregung der Schwingung.

Zusätzlich oder alternativ umfassen bzw. weisen die Schritte a) und b) auf: Ausfiltern, insbesondere automatisches Ausfiltern, insbesondere nur, einer, insbesondere der, mindestens die Schwingung anregenden Frequenzkomponente bzw. eines, insbesondere des, Frequenzanteils, soweit vorhanden bzw. enthalten, insbesondere einer, insbesondere der, Eigen- und/oder Resonanzfrequenz der Schwingung, aus einem, insbesondere dem, Größen-Signal, insbesondere einem, insbesondere dem, Soll-Drehmoment-Signal, einem, insbesondere dem, Soll-Strom-Signal und/oder einem, insbesondere dem, Rückführungsgrößen-Signal, insbesondere zum Betreiben und/oder Ansteuern des Elektroantriebsmotors, einer, insbesondere der, Motorsteuerelektronik, insbesondere einer, insbesondere der, Motorregelelektronik, des Antriebsmotorsystems, insbesondere mittels des Kerbfilters. In anderen Worten: Filtern, insbesondere automatisches Filtern, des Größen-Signals, insbesondere mit einer Filtercharakteristik, derart, dass im Frequenzspektrum des Größen-Signals die mindestens die Schwingung anregende Frequenzkomponente bzw. der Frequenzanteil, soweit vorhanden bzw. enthalten, insbesondere der Eigen- und/oder Resonanzfrequenz, unterdrückt wird und/oder ist.

Insbesondere kann die Schwingung, insbesondere ein Wert und/oder eine Frequenz und/oder eine Amplitude der Schwingung, insbesondere werksseitig, fest vorgegeben bzw. eingestellt sein. Der Schritt b) kann umfassen bzw. aufweisen: Ansteuern, insbesondere automatisches Ansteuern, basierend auf bzw. in Abhängigkeit der fest vorgegebenen Schwingung.

In einer Weiterbildung der Erfindung umfasst bzw. weist das Verfahren den Schritt auf: Erfassen, insbesondere automatisches und/oder mittelbares und/oder unmittelbares Erfassen, mindestens einer Ist-Schwingung, insbesondere eines Werts und/oder einer Frequenz und/oder einer Amplitude der Ist-Schwingung, des drehschwingungsfähigen Systems und/oder angeregt durch das drehschwingungsfähige System, insbesondere während des Schritts a) bzw. zeitgleich mit dem Schritt a) und/oder zeitlich vor dem Schritt b) und/oder während des Schritts b) bzw. zeitgleich mit dem Schritt b). Der Schritt b) umfasst bzw. weist auf: Ansteuern, insbesondere automatisches Ansteuern, basierend auf bzw. in Abhängigkeit mindestens der erfassten Ist-Schwingung. Dies ermöglicht eine Flexibilität und/oder eine Anpassung, insbesondere an eine Alterung und/oder eine Toleranz mindestens eines Teils des Bearbeitungsgeräts und/oder die aktive Dämpfung und/oder die aktive Reduzierung, insbesondere die aktive Vermeidung, einer Anregung der Schwingung. Insbesondere kann die Ist-Schwingung wie die vorhergehend beschriebene Schwingung sein. Zusätzlich oder alternativ kann das Erfassen mittels mindestens eines Sensors, insbesondere des Bearbeitungsgeräts, ausgeführt werden bzw. erfolgen.

In einer Ausgestaltung der Erfindung umfasst bzw. weist das Verfahren auf: Erfassen mindestens der Ist-Schwingung mittels der Schwingungsdämpfungseinrichtung und/oder des Antriebsmotorsystems, insbesondere mittels Erfassens, insbesondere und Analysierens, eines zeitlichen Ist-Betriebsdatenverlaufs, insbesondere eines zeitlichen Verlaufs von Werten der Betriebsdaten, insbesondere eines zeitlichen Ist-Drehzahl- und/oder Strom- und/oder Spannungs- und/oder Leistungsverlaufs, insbesondere eines zeitlichen Verlaufs eines Werts der Ist-Drehzahl und/oder des Ist-Stroms und/oder der Ist-Spannung und/oder der Ist-Leistung, des Antriebsmotorsystems, insbesondere aufweisend den Elektroantriebsmotor. Dies ermöglicht einen Synergieeffekt und somit einen Einspareffekt. Insbesondere wird bezüglich des Erfassens mindestens der Ist-Schwingung mittels Erfassens des zeitlichen Ist-Betriebsdatenverlaufs auf die Fachliteratur und/oder nachgehend Folgendes verwiesen.

In einer Weiterbildung der Erfindung hat bzw. weist die Welle eine Länge von minimal 0,5 Meter (m), insbesondere von minimal 1 m, und/oder von maximal 4,5 m, insbesondere von maximal 3 m, insbesondere von 1,5 m, auf. Zusätzlich oder alternativ hat bzw. weist die Schwingung eine Frequenz, insbesondere eine, insbesondere die, Eigen- und/oder Resonanzfrequenz, von minimal 2 Hertz (Hz), insbesondere von minimal 5 Hz, insbesondere von minimal 10 Hz, und/oder von maximal 100 Hz, insbesondere von maximal 50 Hz, auf. Diese Länge ermöglicht diese Frequenz. Zusätzlich oder alternativ ermöglicht diese Frequenz, dass die Schwingung für den Benutzer besonders spürbar sein kann.

Das erfindungsgemäße handgeführte Bearbeitungsgerät umfasst bzw. weist eine, insbesondere die, bewegliche Bearbeitungswerkzeugeinrichtung, eine, insbesondere die, Welle, ein, insbesondere das, Antriebsmotorsystem, eine, insbesondere die, ansteuerbare Schwingungsdämpfungseinrichtung und eine, insbesondere elektrische, Betriebs- und Ansteuereinrichtung auf. Die Welle ist zur Bewegung der Bearbeitungswerkzeugeinrichtung ausgebildet. Das Antriebsmotorsystem ist zum Antrieb der Welle ausgebildet. Die Bearbeitungswerkzeugeinrichtung, die Welle und das Antriebsmotorsystem mindestens teilweise bilden mindestens einen, insbesondere den mindestens einen, Teil eines, insbesondere des, mindestens drehschwingungsfähigen Systems. Die Schwingungsdämpfungseinrichtung ist mindestens zur Dämpfung und/oder zur Reduzierung, insbesondere Vermeidung, einer Anregung mindestens einer, insbesondere der mindestens einen, Schwingung des drehschwingungsfähigen Systems und/oder anregbar durch das drehschwingungsfähige System ausgebildet. Die Betriebs- und Ansteuereinrichtung ist zum, insbesondere automatischen, Betreiben des Antriebsmotorsystems zum Antrieb der Welle zur Bewegung der Bearbeitungswerkzeugeinrichtung und zum, insbesondere automatischen, Ansteuern der Schwingungsdämpfungseinrichtung während des Betreibens derart, dass die Schwingung mindestens gedämpft und/oder eine Anregung der Schwingung reduziert, insbesondere vermieden, wird, ausgebildet bzw. konfiguriert. Das Antriebsmotorsystem und die Schwingungsdämpfungseinrichtung sind mindestens teilweise integriert. Das Antriebsmotorsystem umfasst bzw. weist einen, insbesondere den, Elektroantriebsmotor auf.

Der Elektroantriebsmotor ist zum Antrieb der Welle ausgebildet. Das Antriebsmotorsystem aufweisend den Elektroantriebsmotor und die Schwingungsdämpfungseinrichtung sind mindestens teilweise integriert. Die Betriebs- und Ansteuereinrichtung ist zum, insbesondere automatischen, Betreiben des Elektroantriebsmotors zum Antrieb der Welle zur Bewegung der Bearbeitungswerkzeugeinrichtung und zum, insbesondere automatischen, Ansteuern und/oder zum, insbesondere automatischen, Betreiben des Elektroantriebsmotors derart, dass die Schwingung mindestens gedämpft und/oder eine Anregung der Schwingung reduziert, insbesondere vermieden, wird, ausgebildet bzw. konfiguriert.

Das Bearbeitungsgerät kann den/die gleichen Vorteil/e wie für das Verfahren vorhergehend beschrieben ermöglichen.

Insbesondere kann das Bearbeitungsgerät, insbesondere die Betriebs- und Ansteuereinrichtung, zum, insbesondere automatischen, Ausführen eines Verfahrens wie vorhergehend beschrieben ausgebildet bzw. konfiguriert sein. Zusätzlich oder alternativ kann das Bearbeitungsgerät wie vorhergehend für das Verfahren beschrieben ausgebildet bzw. konfiguriert sein. Weiter zusätzlich oder alternativ kann die Betriebs- und Ansteuereinrichtung einen Mikrocontroller aufweisen, insbesondere sein.

## KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:

Fig. 1 schematisch ein erfindungsgemäßes handgeführtes Bearbeitungsgerät in Form eines Freischneiders aufweisend einen Schneidfaden und ein erfindungsgemäßes Verfahren zum Betreiben des handgeführten Bearbeitungsgeräts,

Fig. 2 schematisch ein weiteres erfindungsgemäßes handgeführtes Bearbeitungsgerät in Form eines Kantenschneiders aufweisend ein Schneidmesser und das erfindungsgemäße Verfahren zum Betreiben des handgeführten Bearbeitungsgeräts,

Fig. 3 schematisch Details des jeweiligen Bearbeitungsgeräts der Fig. 1 und 2,

Fig. 4 schematisch einen Graphen einer jeweiligen Drehschwingung, insbesondere einer Amplitude einer Beschleunigung über einer Frequenz, des jeweiligen Bearbeitungsgeräts der Fig. 1 und 2 aufweisend eine Starrwelle oder eine Flexwelle ohne Ansteuern einer Schwingungsdämpfungseinrichtung des jeweiligen Bearbeitungsgeräts des erfindungsgemäßen Verfahrens,

Fig. 5 schematisch einen Graphen einer jeweiligen Biegeschwingung, insbesondere einer Amplitude einer Auslenkung über einer Frequenz, des jeweiligen Bearbeitungsgeräts der Fig. 1 und 2 aufweisend die Flexwelle ohne Ansteuern einer Schwingungsdämpfungseinrichtung des jeweiligen Bearbeitungsgeräts des erfindungsgemäßen Verfahrens,

Fig. 6 schematisch ein Erfassen einer Ist-Schwingung des jeweiligen Bearbeitungsgeräts der Fig. 1 und 2 des erfindungsgemäßen Verfahrens, insbesondere einen Graphen eines zeitlichen Ist-Drehzahlverlaufs eines Antriebsmotorsystems des Bearbeitungsgeräts über der Zeit, und

Fig. 7 schematisch ein nochmals weiteres handgeführtes Bearbeitungsgerät und das Verfahren zum Betreiben des handgeführten Bearbeitungsgeräts.

## DETAILLIERTE BESCHREIBUNG DER AUSFÜHRUNGSBEISPIELE

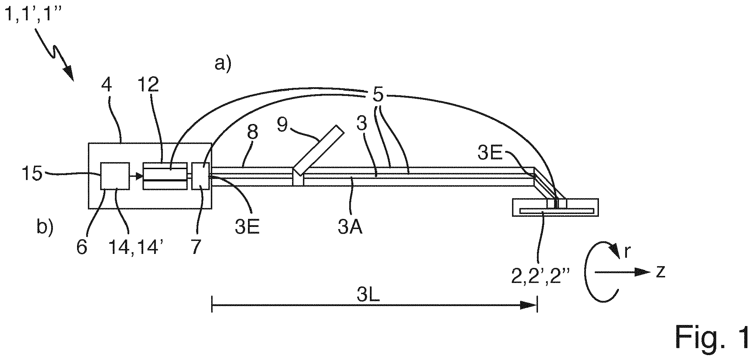

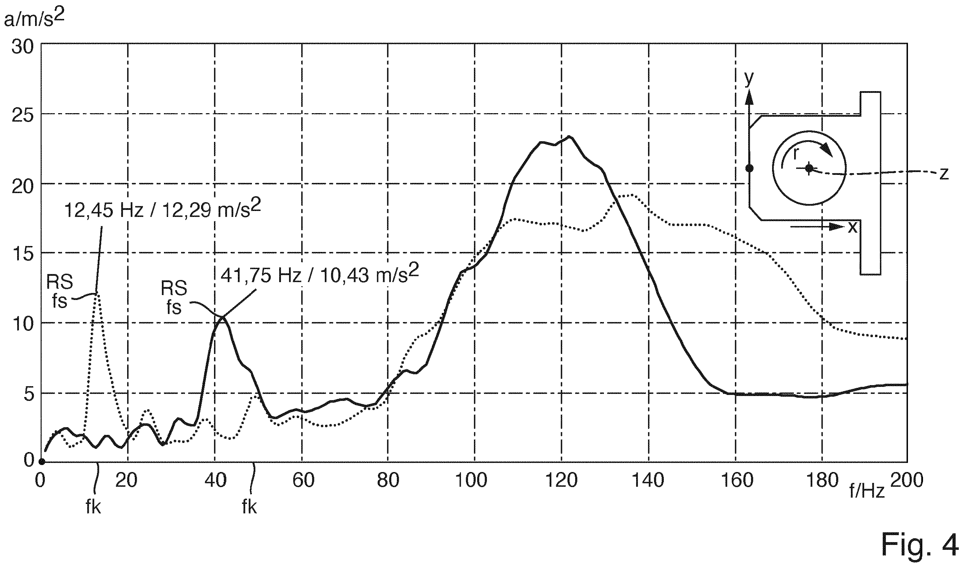

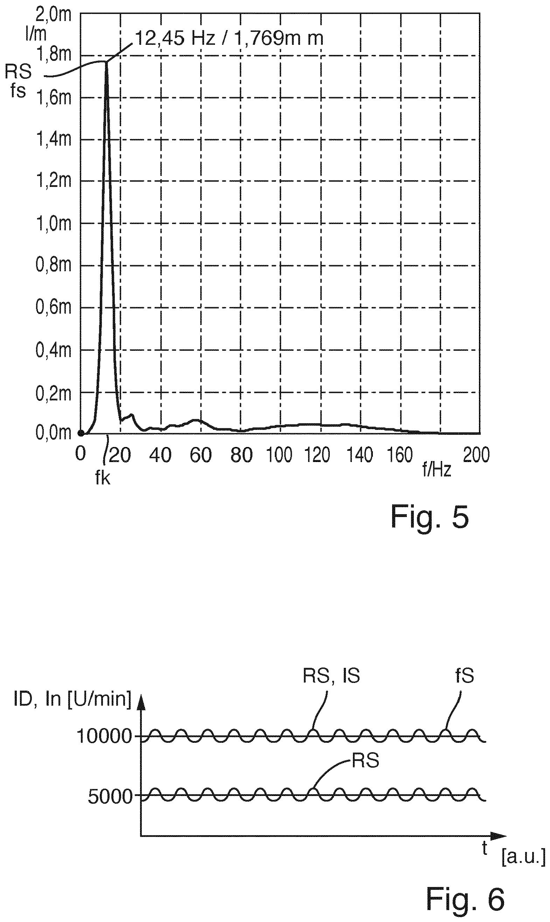

Fig. 1, 2 und 3 zeigen, insbesondere jeweils, ein erfindungsgemäßes handgeführtes Bearbeitungsgerät 1. Das Bearbeitungsgerät 1 weist eine bewegliche Bearbeitungswerkzeugeinrichtung 2, eine Welle 3, ein Antriebsmotorsystem 4, eine ansteuerbare Schwingungsdämpfungseinrichtung 6 und eine Betriebs- und Ansteuereinrichtung 15 auf. Die Welle 3 ist zur Bewegung der Bearbeitungswerkzeugeinrichtung 2 ausgebildet, insbesondere bewegt. Das Antriebsmotorsystem 4 ist zum Antrieb der Welle 3 ausgebildet, insbesondere treibt an. Die Bearbeitungswerkzeugeinrichtung 2, die Welle 3 und das Antriebsmotorsystem 4 mindestens teilweise bilden mindestens einen Teil eines mindestens drehschwingungsfähigen Systems 5. Die Schwingungsdämpfungseinrichtung 6 ist mindestens zur Dämpfung und/oder zur Reduzierung, insbesondere Vermeidung, einer Anregung mindestens einer Schwingung RS des drehschwingungsfähigen Systems 5 und/oder anregbar durch das drehschwingungsfähige System 5, wie in Fig. 4 und 5 gezeigt, ausgebildet, insbesondere dämpft und/oder reduziert, insbesondere vermeidet. Die Betriebs- und Ansteuereinrichtung 15 ist zum Betreiben des Antriebsmotorsystems 4 zum Antrieb der Welle 3 zur Bewegung der Bearbeitungswerkzeugeinrichtung 2 und zum Ansteuern der Schwingungsdämpfungseinrichtung 6 während des Betreibens derart, dass die Schwingung RS mindestens gedämpft und/oder eine Anregung der Schwingung RS reduziert, insbesondere vermieden, wird, ausgebildet, insbesondere betreibt und steuert an.

Fig. 1, 2, 3 und 6 zeigen ein erfindungsgemäßes Verfahren zum Betreiben des handgeführten Bearbeitungsgeräts 1. Das Bearbeitungsgerät 1 weist die bewegliche Bearbeitungswerkzeugeinrichtung 2, die Welle 3, das Antriebsmotorsystem 4 und die ansteuerbare Schwingungsdämpfungseinrichtung 6 auf. Die Welle 3 ist zur Bewegung der Bearbeitungswerkzeugeinrichtung 2 ausgebildet. Das Antriebsmotorsystem 4 ist zum Antrieb der Welle 3 ausgebildet. Die Bearbeitungswerkzeugeinrichtung 2, die Welle 3 und das Antriebsmotorsystem 4 mindestens teilweise bilden den mindestens einen Teil des mindestens drehschwingungsfähigen Systems 5. Die Schwingungsdämpfungseinrichtung 6 ist mindestens zur Dämpfung und/oder zur Reduzierung, insbesondere Vermeidung, einer Anregung der mindestens einen Schwingung RS des drehschwingungsfähigen Systems 5 und/oder anregbar durch das drehschwingungsfähige System 5 ausgebildet. Das Verfahren weist die Schritte auf: a) Betreiben des Antriebsmotorsystems 4 zum Antrieb der Welle 3 zur Bewegung der Bearbeitungswerkzeugeinrichtung 2, insbesondere mittels der Betriebs- und Ansteuereinrichtung 15. b) Ansteuern der Schwingungsdämpfungseinrichtung 6 während des Betreibens derart, dass die Schwingung RS mindestens gedämpft und/oder eine Anregung der Schwingung RS reduziert, insbesondere vermieden, wird, insbesondere mittels der Betriebs- und Ansteuereinrichtung 15.

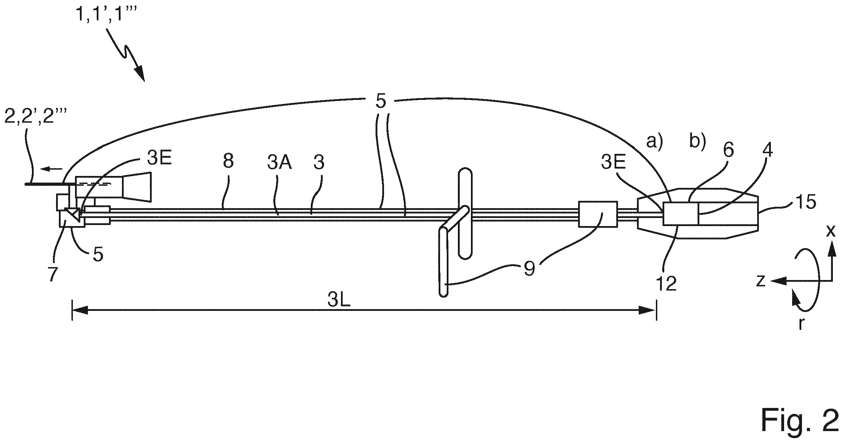

In den gezeigten Ausführungsbeispielen ist das Bearbeitungsgerät 1 ein Schneidgerät 1', insbesondere ein Freischneider 1'', wie in Fig. 1 gezeigt, oder ein Kantenschneider 1''', wie in Fig. 2 gezeigt.

In alternativen Ausführungsbeispielen kann das Schneidgerät ein Hochentaster oder ein Heckenschneider sein.

Zusätzlich oder alternativ ist in den gezeigten Ausführungsbeispielen die Bearbeitungswerkzeugeinrichtung 2 eine Schneidwerkzeugeinrichtung 2', insbesondere weist die Bearbeitungswerkzeugeinrichtung 2 einen Schneidfaden 2'', wie in Fig. 1 gezeigt, oder ein Schneidmesser 2''', wie in Fig. 2 gezeigt, auf.

Des Weiteren weist das Bearbeitungsgerät 1 ein Getriebe 7 auf. Das Getriebe ist zur Bewegung der Bearbeitungswerkzeugeinrichtung 2 ausgebildet, insbesondere bewegt, und die Welle 3 ist zur Bewegung des Getriebes 7 ausgebildet, insbesondere bewegt, wie in Fig. 2 gezeigt. Alternativ ist das Getriebe 7 zum Antrieb der Welle 3 ausgebildet, insbesondere treibt an, und das Antriebsmotorsystem 4 ist zum Antrieb des Getriebes 7 ausgebildet, insbesondere treibt an, wie in Fig. 1 gezeigt. Das Getriebe 7 bildet mindestens teilweise einen Teil des drehschwingungsfähigen Systems 5.

Außerdem weist das Bearbeitungsgerät 1 einen Schaft 8 auf. Die Welle 3 ist in dem Schaft 8 angeordnet. Die Bearbeitungswerkzeugeinrichtung 2 und das Antriebsmotorsystem 4 sind miteinander mittels mindestens des Schafts 8 mechanisch verbunden. Insbesondere ist das drehschwingungsfähige System 5 mittels mindestens des Schafts 8 mechanisch geschlossen.

Weiter weist das Bearbeitungsgerät 1 mindestens einen Handgriff 9 auf. Der mindestens eine Handgriff 9 ist zwischen Enden 3E der Welle 3 im Bereich der Welle 3 angeordnet, insbesondere an dem Schaft 8 befestigt.

Zudem weist die Welle 3 eine Länge 3L von minimal 0,5 m, insbesondere von minimal 1 m, und/oder von maximal 4,5 m, insbesondere von maximal 3 m, insbesondere von 1,5 m, auf, insbesondere in einer Richtung z.

Zusätzlich oder alternativ weist die Schwingung RS eine Frequenz fS, insbesondere eine Eigen- und/oder Resonanzfrequenz, von minimal 2 Hz, insbesondere von minimal 5 Hz, insbesondere von minimal 10 Hz, und/oder von maximal 100 Hz, insbesondere von maximal 50 Hz, auf, wie in Fig. 4 und 5 gezeigt.

Im Detail ist die Schwingung RS eine Drehschwingung des drehschwingungsfähigen Systems 5, insbesondere um eine Längsachse 3A der Welle 3 bzw. die Richtung z, wie in Fig. 4 gezeigt.

Falls die Welle 3 eine Starrwelle ist, weist die Schwingung RS in Form der Drehschwingung die Frequenz fS von z.B. 41,75 Hz auf, wie in Fig. 4 gezeigt, insbesondere einem Graphen einer Amplitude einer durch die Schwingung RS in Form der Drehschwingung hervorgerufenen Beschleunigung, insbesondere des Getriebes 7 des Ausführungsbeispiels der Fig. 2, in einer Richtung y orthogonal zu der Längsachse 3A der Welle 3 bzw. der Richtung z über einer Frequenz. Falls die Welle 3 eine Flexwelle ist, weist die Schwingung RS in Form der Drehschwingung die Frequenz fS von z.B. 12,45 Hz auf.

Insbesondere ist die Frequenz fS der Schwingung RS in Form der Drehschwingung durch eine, insbesondere jeweilige, Trägheit der Bearbeitungswerkzeugeinrichtung 2 (J2) und des Antriebsmotorsystems 4 (J4), einem Übersetzungsverhältnis des Getriebes 7 (ü7) und einer Steifigkeit der Welle 3 (C3) bestimmt, insbesondere wie folgt:

$$fS * 2\pi = \sqrt{\frac{C3 * ((J4 * ü7^2) + J2)}{J4 * J2}}$$

In den gezeigten Ausführungsbeispielen ist das mindestens drehschwingungsfähige System 5, insbesondere sind die Welle 3 und der Schaft 8, zusätzlich biegeschwingungsfähig.

Insbesondere bildet der Schaft 8 mindestens teilweise einen Teil des drehschwingungsfähigen und biegeschwingungsfähigen Systems 5.

Im Detail ist die Schwingung RS eine Biegeschwingung des mindestens drehschwingungsfähigen Systems 5, insbesondere der Welle 3 und des Schafts 8, anregbar, insbesondere mittels einer Struktur des Bearbeitungsgeräts 1, durch die Drehschwingung des drehschwingungsfähigen Systems 5, insbesondere in einer Richtung x orthogonal zu der Längsachse 3A der Welle 3 bzw. der Richtung z und/oder der Richtung y, wie in Fig. 4 gezeigt, insbesondere falls die Welle 3 die Flexwelle ist.

Insbesondere falls die Welle 3 die Flexwelle ist, weist die Schwingung RS in Form der Biegeschwingung die Frequenz fS von z.B. 12,45 Hz auf, wie in Fig. 5 gezeigt, insbesondere einem Graphen einer Amplitude einer durch die Schwingung RS in Form der Biegeschwingung hervorgerufenen Auslenkung, insbesondere des Handgriffs 9, in der Richtung x orthogonal zu der Längsachse 3A der Welle 3 bzw. der Richtung z und/oder der Richtung y über einer Frequenz.

Das Ansteuern der Schwingungsdämpfungseinrichtung 6 während des Betreibens ermöglicht, dass die Schwingung RS mindestens gedämpft und/oder eine Anregung der Schwingung RS reduziert, insbesondere vermieden, wird.

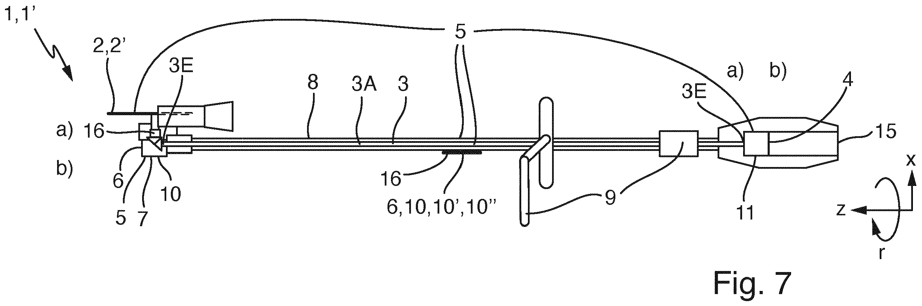

Im Detail weist in dem Ausführungsbeispiel der Fig. 7 die Schwingungsdämpfungseinrichtung 6 mindestens einen Aktor 10, insbesondere mindestens einen Solenoid 10' und/oder einen Linearaktor 10", auf. Der mindestens eine Aktor 10 ist mindestens zur Dämpfung und/oder zur Reduzierung, insbesondere Vermeidung, einer Anregung mindestens der Schwingung RS ausgebildet, insbesondere dämpft und/oder reduziert, insbesondere vermeidet. Der Schritt b) weist auf: Ansteuern des mindestens einen Aktors 10 derart, dass die Schwingung RS mindestens gedämpft und/oder eine Anregung der Schwingung RS reduziert, insbesondere vermieden, wird, insbesondere mittels der Betriebs- und Ansteuereinrichtung 15.

Außerdem sind in dem Ausführungsbeispiel der Fig. 7 das Antriebsmotorsystem 4 und die Schwingungsdämpfungseinrichtung 6 vollständig verschieden voneinander.

Weiter weist in dem Ausführungsbeispiel der Fig. 7 das Antriebsmotorsystem 4 einen Verbrennungsantriebsmotor 11 auf. Der Verbrennungsantriebsmotor 11 ist zum Antrieb der Welle 3 ausgebildet, insbesondere treibt an. Der Schritt a) weist auf: Betreiben des Verbrennungsantriebsmotors 11 zum Antrieb der Welle 3 zur Bewegung der Bearbeitungswerkzeugeinrichtung 2, insbesondere mittels der Betriebs- und Ansteuereinrichtung 15.

Zudem sind in den Ausführungsbeispielen der Fig. 1, 2 und 3 das Antriebsmotorsystem 4 und die Schwingungsdämpfungseinrichtung 6 mindestens teilweise integriert.

Des Weiteren weist in den Ausführungsbeispielen der Fig. 1, 2 und 3 das Antriebsmotorsystem 4 einen Elektroantriebsmotor 12 auf. Der Elektroantriebsmotor 12 ist zum Antrieb der Welle 3 ausgebildet, insbesondere treibt an. Insbesondere sind das Antriebsmotorsystem 4 aufweisend den Elektroantriebsmotor 12 und die Schwingungsdämpfungseinrichtung 6 mindestens teilweise integriert. Der Schritt a) weist auf: Betreiben des Elektroantriebsmotors 12 zum Antrieb der Welle 3 zur Bewegung der Bearbeitungswerkzeugeinrichtung 2, insbesondere mittels der Betriebs- und Ansteuereinrichtung 15. Insbesondere weisen/weist der Schritt a) und/oder der Schritt b) auf: Ansteuern und/oder Betreiben des Elektroantriebsmotors 12 derart, dass die Schwingung RS mindestens gedämpft und/oder eine Anregung der Schwingung RS reduziert, insbesondere vermieden, wird, insbesondere mittels der Betriebs- und Ansteuereinrichtung 15.

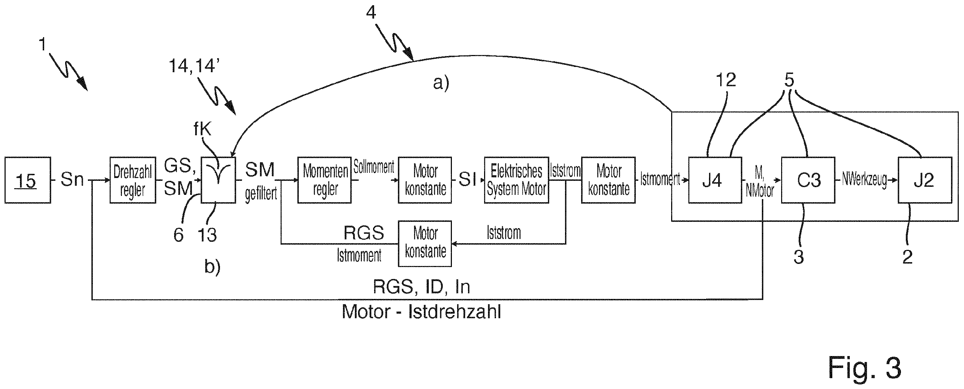

Im Detail weist die Schwingungsdämpfungseinrichtung 6 einen Kerbfilter 13 auf, wie in Fig. 3 gezeigt. Der Schritt a) und/oder der Schritt b) weisen/weist auf: Betreiben und/oder Ansteuern des Elektroantriebsmotors 12 unter Verwendung des Kerbfilters 13, insbesondere mittels Ausfilterns einer mindestens die Schwingung RS anregenden Frequenzkomponente fK, insbesondere der Eigen- und/oder Resonanzfrequenz fS der Schwingung RS, wie in Fig. 4 gezeigt, aus einem Größen-Signal GS einer Motorsteuerelektronik 14, insbesondere einer Motorregelelektronik 14', in Fig. 3 in Form einer Kaskadenregelung, des Antriebsmotorsystems 4.

In den gezeigten Ausführungsbeispielen wird aus dem Größen-Signal GS in Form eines Soll-Drehmoment-Signals SM ausgefiltert, insbesondere unter Verwendung des Kerbfilters 13 an einem Ausgang eines Drehzahlreglers der Motorregelelektronik 14'. In alternativen Ausführungsbeispielen kann aus dem Größen-Signal GS in Form eines Soll-Strom-Signals SI oder eines Rückführungsgrößen-Signals RGS ausgefiltert werden.

Insbesondere ist die Motorsteuerelektronik 14 zum Steuern, insbesondere die Motorregelelektronik 14' zum Regeln, eines Drehmoments M erzeugt von dem Antriebsmotorsystem 4, insbesondere dem Elektroantriebsmotor 12, zur Erreichung einer, insbesondere zeitlich konstanten, Soll-Drehzahl Sn ausgebildet, insbesondere steuert, insbesondere regelt.

Die Soll-Drehzahl Sn kann in einem lastfreien Zustand des Bearbeitungsgeräts 1, insbesondere des Antriebsmotorsystems 4, insbesondere des Elektroantriebsmotors 12, erreicht werden.

Da die Frequenz fS der Schwingung RS in einem Dynamikbereich der Drehzahlregelung liegen kann, dass bedeutet, dass die Schwingung RS durch die elektronische Drehzahlregelung angeregt werden kann, ermöglicht der Kerbfilter 13 Dämpfung und/oder die Reduzierung, insbesondere die Vermeidung, einer Anregung der Schwingung RS.

Das Verfahren kann als elektrische, insbesondere elektronische, und/oder gesteuerte, insbesondere geregelte, Schwingungsdämpfung bezeichnet werden.

Außerdem weist das Verfahren den Schritt auf: Erfassen mindestens einer Ist-Schwingung IS des drehschwingungsfähigen Systems 5 und/oder angeregt durch das drehschwingungsfähige System 5, insbesondere während des Schritts a) und/oder zeitlich vor dem Schritt b) und/oder während des Schritts b), wie in Fig. 6 gezeigt. Der Schritt b) weist auf: Ansteuern basierend auf mindestens der erfassten Ist-Schwingung IS.

In dem Ausführungsbeispiel der Fig. 7 wird das Erfassen mittels mindestens eines Sensors 16 des Bearbeitungsgeräts 1 ausgeführt.

Insbesondere ist der Sensor 16 im Bereich der Bearbeitungswerkzeugeinrichtung 2 und/oder eines, insbesondere unteren und/oder ersten Endes, insbesondere an dem Ende, der Welle 3 oder des Schafts 4 und/oder zwischen den Enden 3E, insbesondere in der Mitte, der Welle 3 im Bereich der Welle 3, insbesondere an dem Schaft 8, angeordnet, insbesondere befestigt.

Zusätzlich oder alternativ kann der Sensor 16 ein Drehzahlsensor sein, insbesondere zum Erfassen einer, insbesondere werkzeugseitigen, Ist-Drehzahl im Bereich der Bearbeitungswerkzeugeinrichtung 2, insbesondere der Bearbeitungswerkzeugeinrichtung 2.

Weiter zusätzlich oder alternativ kann in den anderen Ausführungsbeispielen, insbesondere der Fig. 1, 2 und 3, das Erfassen auch mittels des mindestens einen Sensors 16 des Bearbeitungsgeräts 1 ausgeführt werden.

Somit können die werkzeugseitige Ist-Drehzahl und eine motorseitige Ist-Drehzahl, insbesondere des Antriebsmotorsystems 4, insbesondere des Elektroantriebsmotors 12, insbesondere und ein Positionssignal, zur Verfügung stehen. Somit kann durch das Antriebsmotorsystem 4 aufweisend den Elektroantriebsmotor 12, insbesondere und die Motorregelelektronik 14', und die Schwingungsdämpfungseinrichtung 6 mindestens teilweise integriert die Schwingung RS mindestens aktiv gedämpft und/oder eine Anregung der Schwingung RS aktiv reduziert, insbesondere aktiv vermieden, werden, insbesondere mittels der Betriebs- und Ansteuereinrichtung 15.

Gezeigt weist in den Ausführungsbeispielen der Fig. 1, 2 und 3 das Verfahren auf: Erfassen mindestens der Ist-Schwingung IS mittels der Schwingungsdämpfungseinrichtung 6 und/oder des Antriebsmotorsystems 4, insbesondere mittels Erfassens eines zeitlichen Ist-Betriebsdatenverlaufs ID des Antriebsmotorsystems 4, insbesondere ohne den Sensor 16.

In den gezeigten Ausführungsbeispielen wird der zeitliche Ist-Betriebsdatenverlauf ID in Form eines zeitlichen Ist-Drehzahlverlauf In erfasst. In alternativen Ausführungsbeispielen kann der zeitliche Ist-Betriebsdatenverlauf in Form eines zeitlichen Ist-Strom- und/oder Spannungs- und/oder Leistungsverlaufs erfasst werden.

Wie in Fig. 6 gezeigt, weist der zeitliche Ist-Betriebsdatenverlauf ID bei eigentlich zeitlich konstanten Ist-Betriebsdaten die Ist-Schwingung IS auf. Insbesondere ist der Ist-Betriebsdatenverlauf ID in Form des zeitlichen Ist-Drehzahlverlaufs In. Zusätzlich oder alternativ sind die eigentlich zeitlich konstanten Ist-Betriebsdaten eine eigentlich zeitlich konstante Ist-Drehzahl. Weiter zusätzlich oder alternativ bei eigentlich zeitlich konstanten Ist-Betriebsdaten, da die Soll-Betriebsdaten zeitlich konstant sein sollen, insbesondere da die Soll-Drehzahl Sn zeitlich konstant sein soll, z.B. 5.000 Umdrehungen pro Minute [U/min] oder 10.000 U/min. Weiter zusätzlich oder alternativ ist die Ist-Schwingung mit der, insbesondere drehzahlunabhängigen, Frequenz fS, insbesondere und einer Amplitude von mehreren 100 U/min.

In alternativen Ausführungsbeispielen kann der zeitliche Betriebsdatenverlauf, insbesondere die Drehzahl, insbesondere der Bearbeitungswerkzeugeinrichtung, durch einen sogenannten "Beobachter" auch sensorlos geschätzt werden.

Wie die gezeigten und oben erläuterten Ausführungsbeispiele deutlich machen, stellt die Erfindung ein vorteilhaftes Verfahren zum Betreiben eines handgeführten Bearbeitungsgeräts und ein vorteilhaftes handgeführtes Bearbeitungsgerät bereit, das jeweils verbesserte Eigenschaften aufweist, insbesondere einen hohen Komfort für einen Benutzer des Bearbeitungsgeräts ermöglicht.

**Patentansprüche**

1. Verfahren zum Betreiben eines handgeführten Bearbeitungsgeräts (1), wobei das Bearbeitungsgerät (1) aufweist:

   - eine bewegliche Bearbeitungswerkzeugeinrichtung (2),
   - eine Welle (3), wobei die Welle (3) zur Bewegung der Bearbeitungswerkzeugeinrichtung (2) ausgebildet ist,
   - ein Antriebsmotorsystem (4), wobei das Antriebsmotorsystem (4) zum Antrieb der Welle (3) ausgebildet ist,
   - wobei die Bearbeitungswerkzeugeinrichtung (2), die Welle (3) und das Antriebsmotorsystem (4) mindestens teilweise mindestens einen Teil eines mindestens drehschwingungsfähigen Systems (5) bilden, und
   - eine ansteuerbare Schwingungsdämpfungseinrichtung (6), wobei die Schwingungsdämpfungseinrichtung (6) mindestens zur Dämpfung und/oder zur Reduzierung einer Anregung mindestens einer Schwingung (RS) des drehschwingungsfähigen Systems (5) und/oder anregbar durch das drehschwingungsfähige System (5) ausgebildet ist,

- wobei das Verfahren die Schritte aufweist:

   a) Betreiben des Antriebsmotorsystems (4) zum Antrieb der Welle (3) zur Bewegung der Bearbeitungswerkzeugeinrichtung (2), und
   b) Ansteuern der Schwingungsdämpfungseinrichtung (6) während des Betreibens derart, dass die Schwingung (RS) mindestens gedämpft und/oder eine Anregung der Schwingung (RS) reduziert wird, **dadurch gekennzeichnet, dass**

- das Antriebsmotorsystem (4) und die Schwingungsdämpfungseinrichtung (6) mindestens teilweise integriert sind, und
- wobei das Antriebsmotorsystem (4) einen Elektroantriebsmotor (12) aufweist, wobei der Elektroantriebsmotor (12) zum Antrieb der Welle (3) ausgebildet ist, und wobei das Antriebsmotorsystem (4) aufweisend den Elektroantriebsmotor (12) und die Schwingungsdämpfungseinrichtung (6) mindestens teilweise integriert sind, und
- wobei der Schritt a) aufweist: Betreiben des Elektroantriebsmotors (12) zum Antrieb der Welle (3) zur Bewegung der Bearbeitungswerkzeugeinrichtung (2), und wobei der Schritt a) und/oder der Schritt b) aufweisen/aufweist: Betreiben und/oder Ansteuern des Elektroantriebsmotors (12) derart, dass die Schwingung (RS) mindestens gedämpft und/oder eine Anregung der Schwingung (RS) reduziert wird.

2. Verfahren nach Anspruch 1,

   - wobei das Bearbeitungsgerät (1) ein Schneidgerät (1'), insbesondere ein Freischneider (1") oder ein Kantenschneider (1‴), ist, und/oder
   - wobei die Bearbeitungswerkzeugeinrichtung (2) eine Schneidwerkzeugeinrichtung (2') ist, insbesondere einen Schneidfaden (2"), ein Schneidmesser (2‴) oder ein Schneidblatt aufweist.

3. Verfahren nach einem der vorhergehenden Ansprüche,

   - wobei das Bearbeitungsgerät (1) ein Getriebe (7) aufweist,
   - wobei das Getriebe (7) zur Bewegung der Bearbeitungswerkzeugeinrichtung (2) ausgebildet ist und wobei die Welle (3) zur Bewegung des Getriebes (7) ausgebildet ist, und/oder wobei das Getriebe (7) zum Antrieb der Welle (3) ausgebildet ist und wobei das Antriebsmotorsystem (4) zum Antrieb des Getriebes (7) ausgebildet ist, und

   - wobei das Getriebe (7) mindestens teilweise einen Teil des drehschwingungsfähigen Systems (5) bildet.

4. Verfahren nach einem der vorhergehenden Ansprüche,

   - wobei das Bearbeitungsgerät (1) einen Schaft (8) aufweist,
   - wobei die Welle (3) in dem Schaft (8) angeordnet ist, und
   - wobei die Bearbeitungswerkzeugeinrichtung (2) und das Antriebsmotorsystem (4) miteinander mittels mindestens des Schafts (8) mechanisch verbunden sind, insbesondere wobei das drehschwingungsfähige System (5) mittels mindestens des Schafts (8) mechanisch geschlossen ist.

5. Verfahren nach einem der vorhergehenden Ansprüche, insbesondere nach Anspruch 4,

   - wobei das Bearbeitungsgerät (1) mindestens einen Handgriff (9) aufweist,
   - wobei der mindestens eine Handgriff (9) zwischen Enden (3E) der Welle (3) im Bereich der Welle (3) angeordnet ist, insbesondere an dem Schaft (8) befestigt ist.

6. Verfahren nach einem der vorhergehenden Ansprüche,

   - wobei die Schwingungsdämpfungseinrichtung (6) mindestens einen Aktor (10), insbesondere mindestens einen Solenoid (10') und/oder einen Linearaktor (10"), aufweist, wobei der mindestens eine Aktor (10) mindestens zur Dämpfung und/oder zur Reduzierung einer Anregung mindestens der Schwingung (RS) ausgebildet ist, und
   - wobei der Schritt b) aufweist: Ansteuern des mindestens einen Aktors (10) derart, dass die Schwingung (RS) mindestens gedämpft und/oder eine Anregung der Schwingung (RS) vermieden wird.

7. Verfahren nach einem der vorhergehenden Ansprüche,

   - wobei das Antriebsmotorsystem (4) einen Verbrennungsantriebsmotor (11) aufweist, wobei der Verbrennungsantriebsmotor (11) zum Antrieb der Welle (3) ausgebildet ist, und
   - wobei der Schritt a) aufweist: Betreiben des Verbrennungsantriebsmotors (11) zum Antrieb der Welle (3) zur Bewegung der Bearbeitungswerkzeugeinrichtung (2).

**8.** Verfahren nach einem der vorhergehenden Ansprüche,

- wobei die Schwingungsdämpfungseinrichtung (6) einen Kerbfilter (13) aufweist, und
- wobei der Schritt a) und/oder der Schritt b) aufweisen/aufweist: Betreiben und/oder Ansteuern des Elektroantriebsmotors (12) unter Verwendung des Kerbfilters (13), insbesondere mittels Ausfilterns einer mindestens die Schwingung (RS) anregenden Frequenzkomponente (fK) aus einem Größen-Signal (GS), insbesondere einem Soll-Drehmoment-Signal (SM), einem Soll-Strom-Signal (SI) und/oder einem Rückführungsgrößen-Signal (RGS), einer Motorsteuerelektronik (14), insbesondere einer Motorregelelektronik (14'), des Antriebsmotorsystems (4).

**9.** Verfahren nach einem der vorhergehenden Ansprüche,

- wobei das Verfahren den Schritt aufweist: Erfassen mindestens einer Ist-Schwingung (IS) des drehschwingungsfähigen Systems (5) und/oder angeregt durch das drehschwingungsfähige System (5), insbesondere während des Schritts a) und/oder zeitlich vor dem Schritt b) und/oder während des Schritts b), und
- wobei der Schritt b) aufweist: Ansteuern basierend auf mindestens der erfassten Ist-Schwingung (IS).

**10.** Verfahren nach Anspruch 9,

- wobei das Verfahren aufweist: Erfassen mindestens der Ist-Schwingung (IS) mittels der Schwingungsdämpfungseinrichtung (6) und/oder des Antriebsmotorsystems (4),
- insbesondere mittels Erfassens eines zeitlichen Ist-Betriebsdatenverlaufs (ID), insbesondere eines zeitlichen Ist-Drehzahl- und/oder Strom- und/oder Spannungs- und/oder Leistungsverlaufs (In), des Antriebsmotorsystems (4).

**11.** Verfahren nach einem der vorhergehenden Ansprüche,

- wobei die Welle (3) eine Länge (3L) von minimal 0,5 m, insbesondere von minimal 1 m, und/oder von maximal 4,5 m, insbesondere von maximal 3 m, insbesondere von 1,5 m, aufweist, und/oder
- wobei die Schwingung (RS) eine Frequenz (fS) von minimal 2 Hz, insbesondere von minimal 5 Hz, insbesondere von minimal 10 Hz, und/oder von maximal 100 Hz, insbesondere von maximal 50 Hz, aufweist.

**12.** Handgeführtes Bearbeitungsgerät (1), insbesondere zum Ausführen eines Verfahrens nach einem der vorhergehenden Ansprüche, wobei das Bearbeitungsgerät (1) aufweist:

- eine bewegliche Bearbeitungswerkzeugeinrichtung (2),
- eine Welle (3), wobei die Welle (3) zur Bewegung der Bearbeitungswerkzeugeinrichtung (2) ausgebildet ist,
- ein Antriebsmotorsystem (4), wobei das Antriebsmotorsystem (4) zum Antrieb der Welle (3) ausgebildet ist,
- wobei die Bearbeitungswerkzeugeinrichtung (2), die Welle (3) und das Antriebsmotorsystem (4) mindestens teilweise mindestens einen Teil eines mindestens drehschwingungsfähigen Systems (5) bilden,
- eine ansteuerbare Schwingungsdämpfungseinrichtung (6), wobei die Schwingungsdämpfungseinrichtung (6) mindestens zur Dämpfung und/oder zur Reduzierung einer Anregung mindestens einer Schwingung (RS) des drehschwingungsfähigen Systems (5) und/oder anregbar durch das drehschwingungsfähige System (5) ausgebildet ist, und
- eine Betriebs- und Ansteuereinrichtung (15), wobei die Betriebs- und Ansteuereinrichtung (15)
- zum Betreiben des Antriebsmotorsystems (4) zum Antrieb der Welle (3) zur Bewegung der Bearbeitungswerkzeugeinrichtung (2), und
- zum Ansteuern der Schwingungsdämpfungseinrichtung (6) während des Betreibens derart, dass die Schwingung (RS) mindestens gedämpft und/oder eine Anregung der Schwingung (RS) reduziert wird, ausgebildet ist, **dadurch gekennzeichnet, dass**
- das Antriebsmotorsystem (4) und die Schwingungsdämpfungseinrichtung (6) mindestens teilweise integriert sind, und
- wobei das Antriebsmotorsystem (4) einen Elektroantriebsmotor (12) aufweist, wobei der Elektroantriebsmotor (12) zum Antrieb der Welle (3) ausgebildet ist, und wobei das Antriebsmotorsystem (4) aufweisend den Elektroantriebsmotor (12) und die Schwingungsdämpfungseinrichtung (6) mindestens teilweise integriert sind, und
- wobei die Betriebs- und Ansteuereinrichtung (15)
- zum Betreiben des Elektroantriebsmotors (12) zum Antrieb der Welle (3) zur Bewegung der Bearbeitungswerkzeugeinrichtung (2), und
- zum Betreiben und/oder zum Ansteuern des Elektroantriebsmotors (12) derart, dass die Schwingung (RS) mindestens gedämpft und/oder eine Anregung der Schwingung (RS) reduziert wird, ausgebildet ist.

**Claims**

1. Method for operating a hand-guided working apparatus (1), wherein the working apparatus (1) has:

   - a movable working tool installation (2);
   - a shaft (3), wherein the shaft (3) is designed for moving the working tool installation (2);
   - a drive motor system (4), wherein the drive motor system (4) is designed for driving the shaft (3);
   - wherein the working tool installation (2), the shaft (3) and the drive motor system (4) at least in part form at least one part of a system (5) at least capable of rotational oscillation; and
   - a controllable oscillation damping installation (6), wherein the oscillation damping installation (6) is designed at least for damping and/or for reducing an excitation of at least one oscillation (RS) of the system (5) capable of rotational oscillation and/or excitable by the system (5) capable of rotational oscillation;
   - wherein the method comprises the steps:

     a) operating the drive motor system (4) for driving the shaft (3) for moving the working tool installation (2); and
     b) controlling the oscillation damping installation (6) during operation in such a manner that the oscillation (RS) is at least damped and/or an excitation of the oscillation (RS) is reduced,

   **characterized in that**
   - the drive motor system (4) and the oscillation damping installation (6) are at least partially integrated, and
   - wherein the drive motor system (4) has an electric drive motor (12), wherein the electric drive motor (12) is designed for driving the shaft (3), and wherein the drive motor system (4) having the electric drive motor (12) and the oscillation damping installation (6) are at least partially integrated; and
   - wherein step a) comprises: operating the electric drive motor (12) for driving the shaft (3) for moving the working tool installation (2); and wherein step a) and/or step b) comprise/comprises: operating and/or controlling the electric drive motor (12) in such a manner that the oscillation (RS) is at least damped and/or an excitation of the oscillation (RS) is reduced.

2. Method according to Claim 1,

   - wherein the working apparatus (1) is a cutting apparatus (1'), in particular a brushcutter (1'') or an edge trimmer (1'''); and/or
   - wherein the working tool installation (2) is a cutting tool installation (2'), in particular having a cutting line (2''), a cutting knife (2''') or a cutting blade.

3. Method according to one of the preceding claims,

   - wherein the working apparatus (1) has a gearbox (7);
   - wherein the gearbox (7) is designed for moving the working tool installation (2), and wherein the shaft (3) is designed for moving the gearbox (7), and/or wherein the gearbox (7) is designed for driving the shaft (3), and wherein the drive motor system (4) is designed for driving the gearbox (7); and
   - wherein the gearbox (7) at least in part forms a part of the system (5) capable of rotational oscillation.

4. Method according to one of the preceding claims,

   - wherein the working apparatus (1) has a shank (8);
   - wherein the shaft (3) is disposed in the shank (8); and
   - wherein the working tool installation (2) and the drive motor system (4) are mechanically connected to one another by means of at least the shank (8), in particular wherein the system (5) capable of rotational oscillation is mechanically closed by means of at least the shank (8).

5. Method according to one of the preceding claims, in particular according to Claim 4,

   - wherein the working apparatus (1) has at least one handle (9);
   - wherein the at least one handle (9) is disposed in the region of the shaft (3) so as to be between ends (3E) of the shaft (3), in particular being fastened to the shank (8).

6. Method according to one of the preceding claims,

   - wherein the oscillation damping installation (6) has at least one actuator (10), in particular at least one solenoid (10') and/or a linear actuator (10''), wherein the at least one actuator (10) is designed at least for damping and/or for reducing an excitation at least of the oscillation (RS), and
   - wherein step b) comprises: controlling the at least one actuator (10) in such a manner that the oscillation (RS) is at least damped and/or an excitation of the oscillation (RS) is avoided.

7. Method according to one of the preceding claims,

- wherein the drive motor system (4) has an internal combustion drive engine (11), wherein the internal combustion drive engine (11) is designed for driving the shaft (3); and
- wherein step a) comprises: operating the internal combustion drive engine (11) for driving the shaft (3) for moving the working tool installation (2).

8. Method according to one of the preceding claims,

- wherein the oscillation damping installation (6) has a notch filter (13); and
- wherein step a) and/or step b) comprise/comprises: operating and/or controlling the electric drive motor (12) while using the notch filter (13), in particular by means of filtering a frequency component (fK), that excites at least the oscillation (RS),
from a variable signal (GS), in particular a nominal torque signal (SM), a nominal current signal (SI) and/or a feedback variable signal (RGS), of an electronic motor control unit (14), in particular an electronic closed-loop motor control unit (14'), of the drive motor system (4) .

9. Method according to one of the preceding claims,

- wherein the method comprises the step: detecting at least one actual oscillation (IS) of the system (5) capable of rotational oscillation and/or excited by the system (5) capable of rotational oscillation, in particular during step a) and/or temporally before step b) and/or during step b); and
- wherein step b) comprises: controlling based at least on the detected actual oscillation (IS).

10. Method according to Claim 9,

- wherein the method comprises: detecting at least the actual oscillation (IS) by means of the oscillation damping installation (6) and/or the drive motor system (4);
- in particular by means of detecting a temporal actual operating data profile (ID), in particular a temporal actual rotating speed and/or current and/or voltage and/or power profile (In), of the drive motor system (4).

11. Method according to one of the preceding claims,

- wherein the shaft (3) has a length (3L) of at least 0.5 m, in particular of at least 1 m, and/or of at most 4.5 m, in particular of at most 3 m, in particular of 1.5 m; and/or
- wherein the oscillation (RS) has a frequency (fS) of at least 2 Hz, in particular of at least 5 Hz, in particular of at least 10 Hz and/or of at most 100 Hz, in particular of at most 50 Hz.

12. Hand-guided working apparatus (1), in particular for carrying out a method according to one of the preceding claims, wherein the working apparatus (1) has:

- a movable working tool installation (2);
- a shaft (3), wherein the shaft (3) is designed for moving the working tool installation (2);
- a drive motor system (4), wherein the drive motor system (4) is designed for driving the shaft (3);
- wherein the working tool installation (2), the shaft (3) and the drive motor system (4) at least in part form at least one part of a system (5) at least capable of rotational oscillation;
- a controllable oscillation damping installation (6), wherein the oscillation damping installation (6) is designed at least for damping and/or for reducing an excitation of at least one oscillation (RS) of the system (5) capable of rotational oscillation and/or excitable by the system (5) capable of rotational excitation; and
- an operating and controlling installation (15), wherein the operating and controlling installation (15) is designed for
- operating the drive motor system (4) for driving the shaft (3) for moving the working tool installation (2); and
- controlling the oscillation damping installation (6) during operation in such a manner that the oscillation (RS) is at least damped and/or an excitation of the oscillation (RS) is reduced,

**characterized in that**

- the drive motor system (4) and the oscillation damping installation (6) are at least partially integrated, and
- wherein the drive motor system (4) has an electric drive motor (12), wherein the electric drive motor (12) is designed for driving the shaft (3), and wherein the drive motor system (4) having the electric drive motor (12) and the oscillation damping installation (6) are at least partially integrated; and
- wherein the operating and controlling installation (15) is designed for
- operating the electric drive motor (12) for driving the shaft (3) for moving the working tool installation (2); and
- operating and/or controlling the electric drive motor (12) in such a manner that the oscillation (RS) is at least damped and/or an excitation of the oscillation (RS) is reduced.

**Revendications**

1. Procédé de fonctionnement d'un appareil d'usinage (1) guidé à la main, l'appareil d'usinage (1) comprenant :

   - un dispositif à outil d'usinage (2) mobile,
   - un arbre (3), l'arbre (3) étant configuré pour mouvoir le dispositif à outil d'usinage (2),
   - un système de moteur d'entraînement (4), le système de moteur d'entraînement (4) étant configuré pour entraîner l'arbre (3),
   - le dispositif à outil d'usinage (2), l'arbre (3) et le système de moteur d'entraînement (4) formant au moins partiellement au moins une partie d'un système (5) au moins capable de vibrations torsionnelles, et
   - un dispositif d'amortissement de vibrations (6) commandable, le dispositif d'amortissement de vibrations (6) étant configuré au moins pour amortir et/ou pour réduire une excitation d'au moins une vibration (RS) du système (5) capable de vibrations de torsion et/ou pouvant être excitée par le système (5) capable de vibrations torsionnelles,
   - le procédé comprenant les étapes suivantes :

     a) mise en fonctionnement du système de moteur d'entraînement (4) pour entraîner l'arbre (3) afin de mouvoir le dispositif à outil d'usinage (2), et
     b) commande du dispositif d'amortissement de vibrations (6) pendant le fonctionnement de telle sorte que la vibration (RS) soit au moins amortie et/ou qu'une excitation de la vibration (RS) soit réduite,

   **caractérisé en ce que**

   - le système de moteur d'entraînement (4) et le dispositif d'amortissement des vibrations (6) sont au moins partiellement intégrés, et
   - le système de moteur d'entraînement (4) possédant un moteur d'entraînement électrique (12), le moteur d'entraînement électrique (12) étant configuré pour entraîner l'arbre (3), et le système de moteur d'entraînement (4) qui possède le moteur d'entraînement électrique (12) et le dispositif d'amortissement des vibrations (6) étant au moins partiellement intégrés, et
   - l'étape a) comprenant : mise en fonctionnement du moteur d'entraînement électrique (12) pour entraîner l'arbre (3) afin de mouvoir le dispositif à outil d'usinage (2), et l'étape a) et/ou l'étape b) comprenant : mise en fonctionnement et/ou commande du moteur d'entraînement électrique (12) de telle sorte que la vibration (RS) soit au moins amortie et/ou qu'une excitation de la vibration (RS) soit réduite.

2. Procédé selon la revendication 1,

   - l'appareil d'usinage (1) étant un appareil de coupe (1'), en particulier une débroussailleuse (1'') ou un coupe-bordures (1'''), et/ou
   - le dispositif à outil d'usinage (2) étant un dispositif à outil de coupe (2'), notamment qui possède un fil de coupe (2''), un couteau de coupe (2''') ou une lame de coupe.

3. Procédé selon l'une des revendications précédentes,

   - l'appareil d'usinage (1) possédant un engrenage (7),
   - l'engrenage (7) étant configuré pour mouvoir le dispositif à outil d'usinage (2) et l'arbre (3) étant configuré pour mouvoir l'engrenage (7) et/ou l'engrenage (7) étant configuré pour entraîner l'arbre (3) et le système de moteur d'entraînement (4) étant configuré pour entraîner l'engrenage (7), et
   - l'engrenage (7) faisant au moins partiellement partie du système (5) capable de vibrations torsionnelles.

4. Procédé selon l'une des revendications précédentes,

   - l'appareil d'usinage (1) possédant une tige (8),
   - l'arbre (3) étant disposé dans la tige (8), et
   - le dispositif à outil d'usinage (2) et le système de moteur d'entraînement (4) étant reliés mécaniquement l'un à l'autre au moyen d'au moins la tige (8), le système (5) capable de vibrations torsionnelles étant notamment fermé mécaniquement au moyen d'au moins la tige (8).

5. Procédé selon l'une des revendications précédentes, notamment selon la revendication 4,

   - l'appareil d'usinage (1) possédant au moins une poignée (9),
   - l'au moins une poignée (9) étant disposée entre des extrémités (3E) de l'arbre (3) dans la zone de l'arbre (3), notamment à la tige (8).

6. Procédé selon l'une des revendications précédentes,

- le dispositif d'amortissement de vibrations (6) possédant au moins un actionneur (10), notamment au moins un solénoïde (10') et/ou un actionneur linéaire (10''), l'au moins un actionneur (10) étant configuré au moins pour amortir et/ou pour réduire une excitation au moins de la vibration (RS), et

- l'étape b) comprenant : commande de l'au moins un actionneur (10) de telle sorte que la vibration (RS) soit au moins amortie et/ou qu'une excitation de la vibration (RS) soit évitée.

7. Procédé selon l'une des revendications précédentes,

- le système de moteur d'entraînement (4) possédant un moteur d'entraînement à combustion (11), le moteur d'entraînement à combustion (11) étant configuré pour entraîner l'arbre (3), et

- l'étape a) comprenant : mise en fonctionnement du moteur d'entraînement à combustion (11) pour entraîner l'arbre (3) afin de mouvoir le dispositif à outil d'usinage (2).

8. Procédé selon l'une des revendications précédentes,

- le dispositif d'amortissement des vibrations (6) possédant un filtre à encoches (13), et

- l'étape a) et/ou l'étape b) comprenant : mise en fonctionnement et/ou commande du moteur d'entraînement électrique (12) en utilisant le filtre à encoches (13), notamment au moyen de l'élimination par filtrage d'une composante de fréquence (fK) qui excite au moins la vibration (RS) à partir d'un signal de grandeur (GS), notamment d'un signal de couple de consigne (SM), d'un signal de courant de consigne (SI) et/ou d'un signal de grandeur de rétroaction (RGS), d'une électronique de commande de moteur (14), notamment d'une électronique de régulation de moteur (14'), du système de moteur d'entraînement (4).

9. Procédé selon l'une des revendications précédentes,

- le procédé présentant l'étape suivante : détection d'au moins une vibration réelle (IS) du système (5) capable de vibrations torsionnelles et/ou excitée par le système (5) capable de vibrations torsionnelles, notamment pendant l'étape a) et/ou chronologiquement avant l'étape b) et/ou pendant l'étape b), et

- l'étape b) comprenant : commande basée sur au moins la vibration réelle (IS) détectée.

10. Procédé selon la revendication 9,

- le procédé comprenant : détection d'au moins la vibration réelle (IS) au moyen du dispositif d'amortissement de vibrations (6) et/ou du système de moteur d'entraînement (4),

- notamment au moyen de l'acquisition d'une courbe de données de fonctionnement réelles dans le temps (ID), notamment d'une courbe de vitesse de rotation et/ou de courant et/ou de tension et/ou de puissance réelles dans le temps (In), du système de moteur d'entraînement (4).

11. Procédé selon l'une des revendications précédentes,

- l'arbre (3) présentant une longueur (3L) minimale de 0,5 m, notamment minimale de 1 m et/ou maximale de 4,5 m, notamment maximale de 3 m, notamment de 1,5 m, et/ou

- la vibration (RS) présentant une fréquence (fS) minimale de 2 Hz, notamment minimale de 5 Hz, notamment minimale de 10 Hz, et/ou maximale de 100 Hz, notamment maximale de 50 Hz.

12. Appareil d'usinage (1) guidé à la main, notamment destiné à la mise en œuvre d'un procédé selon l'une des revendications précédentes, l'appareil d'usinage (1) comprenant :

- un dispositif à outil d'usinage (2) mobile,

- un arbre (3), l'arbre (3) étant configuré pour mouvoir le dispositif à outil d'usinage (2),

- un système de moteur d'entraînement (4), le système de moteur d'entraînement (4) étant configuré pour entraîner l'arbre (3),

- le dispositif à outil d'usinage (2), l'arbre (3) et le système de moteur d'entraînement (4) formant au moins partiellement au moins une partie d'un système (5) au moins capable de vibrations torsionnelles,

- un dispositif d'amortissement de vibrations (6) commandable, le dispositif d'amortissement de vibrations (6) étant configuré au moins pour amortir et/ou pour réduire une excitation d'au moins une vibration (RS) du système (5) capable de vibrations de torsion et/ou pouvant être excitée par le système (5) capable de vibrations torsionnelles, et

- un dispositif de fonctionnement et de commande (15), le dispositif de fonctionnement et de commande (15) étant configuré

- pour faire fonctionner le système de moteur d'entraînement (4) pour entraîner l'arbre (3) afin de mouvoir le dispositif à outil d'usinage (2), et

- pour commander le dispositif d'amortissement de vibrations (6) pendant le fonctionnement de telle sorte que la vibration (RS) soit au moins amortie et/ou qu'une excitation de la vibration (RS) soit réduite,

**caractérisé en ce que**

- le système de moteur d'entraînement (4) et le dispositif d'amortissement des vibrations (6) sont au moins partiellement intégrés, et
- le système de moteur d'entraînement (4) possédant un moteur d'entraînement électrique (12), le moteur d'entraînement électrique (12) étant configuré pour entraîner l'arbre (3), et le système de moteur d'entraînement (4) qui possède le moteur d'entraînement électrique (12) et le dispositif d'amortissement des vibrations (6) étant au moins partiellement intégrés, et
- le dispositif de fonctionnement et de commande (15) étant configuré
- pour faire fonctionner le moteur d'entraînement électrique (12) pour entraîner l'arbre (3) afin de mouvoir le dispositif à outil d'usinage (2), et
- pour faire fonctionner et/ou commander le moteur d'entraînement électrique (12) de telle sorte que la vibration (RS) soit au moins amortie et/ou qu'une excitation de la vibration (RS) soit réduite.

Fig. 1

Fig. 2

Fig. 3

EP 3 942 916 B1

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005031074 A1